Europäisches Patentamt

European Patent Office

Office européen des brevets

(19)

(11) Numéro de publication: **0 093 707**
**B1**

# FASCICULE DE BREVET EUROPEEN

(12)

(45) Date de publication du fascicule du brevet:
09.04.86

(51) Int. Cl.⁴: **B 60 G 11/08**, B 60 G 3/10,
B 60 G 15/06, F 16 F 1/18

(21) Numéro de dépôt: 81903098.2

(22) Date de dépôt: 19.11.81

(86) Numéro de dépôt international:
**PCT/FR 81/00150**

(87) Numéro de publication internationale:
**WO 83/01758 (26.05.83 Gazette 83/13)**

(54) **SUSPENSION DE VEHICULE AUTOMOBILE PAR LAME ELASTIQUE.**

(30) Priorité: 18.11.81 FR 8121569

(43) Date de publication de la demande:
16.11.83 Bulletin 83/46

(45) Mention de la délivrance du brevet:
09.04.86 Bulletin 86/15

(84) Etats contractants désignés:
**AT CH DE FR GB LI LU NL SE**

(56) Documents cités:
**DE - A - 2 927 486**
**DE - B - 1 190 810**
**FR - A - 650 857**
**FR - A - 968 770**
**FR - A - 1 293 498**
**FR - A - 1 589 805**
**GB - A - 1 224 196**
**GB - A - 2 041 489**
**US - A - 1 396 365**
**US - A - 2 460 106**
**US - A - 3 913 932**

Design Engineering, vol. 51, no. 9, September 1980
(Waseca, Minnesota, USA), J.A. Vaccari: "What's new in
materials for '81 cars", pages 33-34

(73) Titulaire: **BERTIN & CIE, Boîte Postale No. 3,
F-78370 Plaisir (FR)**

(72) Inventeur: **COLLARD, Maurice, 8, Square Poussin
Parly 2, F-78150 Le Chesnay (FR)**
Inventeur: **DE GONCOURT, Louis, 6, rue Nungesser
Voison Le Bretonneux, F-78190 Trappes (FR)**

(74) Mandataire: **de Boisse, Louis, CABINET DE
BOISSE 37, Avenue Franklin D. Roosevelt, F-75008 Paris
(FR)**

## Description

L'invention concerne une suspension de véhicule automobile par lame élastique, ladite lame étant fixée sur le châssis du véhicule et portant à son extrémité libre le support de roue.

La diminution de la consommation des véhicules automobiles passe par la diminution du poids mort; en conséquence, la recherche s'est orientée à la fois vers la mise au point de moterus ayant un meilleur rendement et vers l'allégement tant du moteur que de la carrosserie et des organes de suspension. Une suspension avant du type MacPherson classique comporte un amortisseur, associé à un ressort de suspension fixé sur un élément de carrosserie et un triangle pour la reprise par le châssis des efforts de traînée. Ces suspensions sont équipées, en outre, d'une barre transversale qui réagit en cas de déplacement différentiel des roues vis-à-vis de la caisse. Cette barre est appelée indifféremment barre antiroulis, barre anti-dévers ou barre stabilisatrice. Dans ce cas, le triangle est parfois remplacé par une biellette. Dans les suspensions arrière, les ressorts sont fréquemment remplacés par des barres de torsion qui portent les bras des roues. Les constructeurs ont cherché à remplacer ou à supprimer certain éléments de la suspension. C'est ainsi que le brevet français 1.079.423 décrit une suspension avant dans laquelle la biellette ou le triangle a été remplacé par une lame flexible fixée entre le châssis et la rotule du pivot de fusée. Cette lame, présentant dans son plan une forme triangulaire, supporte le châssis par l'intermédiaire d'une surface de courbure déterminée qui lui donne une élasticité variable.

Le but de cette modification n'est pas un allégement de la suspension, mais une diminution des efforts latéraux supportés par les pièces de guidage, et du nombre d'articulations nécessaire.

Le brevet français 1.597.358 présente une solution dans laquelle le ressort amortisseur est supprimé et remplacé par un ressort à lames transversal fixé en deux points de la carrosserie symétriques par rapport à son axe longitudinal. L'extrémité des ressorts supporte les roues et un étrier relie le support de roue à la carrosserie. Cette réalisation vise à diminuer le nombre des articulations nécessaires entre le support de roue et la carrosserie et, par la suppression du ressort hélicoïdal de suspension, à réduire l'encombrement.

On connaît d'autre part du brevet des EUA No 3.913.932 une suspension de roue de véhicule constituée d'une lame de ressort transversale d'épaisseur et de largeur constantes. La lame est fixée au châssis par des attaches, et porte à ses extrémités les pivots des roues. Ces pivots sont maintenus par des amortisseurs télescopiques verticaux.

La lame est destinée à un train non directeur sans frein et les roues sont maintenues par un axe horizontal déporté.

La lame travaille uniquement dans un plan vertical et ne peut pas reprendre les efforts horizontaux parce que le point de liaison entre le support de roue et la fibre neutre est déporté et parce que lors des débattements les extrémités libres de la lame prennent une courbure.

Le document "Design Engineering" vol. 51. Septembre 1980 No. 9 Waseca, Minn. USA, pages 33—34 décrit un ressort de suspension arrière constitué d'une seule lame faite d'un composite unidirectionnel de fibres de verre dans une matrice d'époxy. La lame a la forme d'un noeud papillon étroit au centre et large aux extrémités tandis qu'en coupe longitudinale, elle est épaisse au centre et mince aux extrémités. Cette lame n'assure pas la fonction anti roulis qui est prise en charge par des barres.

La suspension, objet de l'invention, a pour but une diminution de poids obtenue entre autres par la suppression du ressort hélicoïdal de suspension du triangle ou de la biellette et, par au moins un allègement de la barre anti-dévers. Ces différents éléments sont remplacés par une lame élastique en matériau composite présentant dans son plan de symétrie vertical une hauteur croissante de sont point de fixation au châssis à l'extrémité supportant la roue.

Les explications et figures, données ci-après à titre d'exemple, permettront de comprendre comment l'invention peut être réalisée.

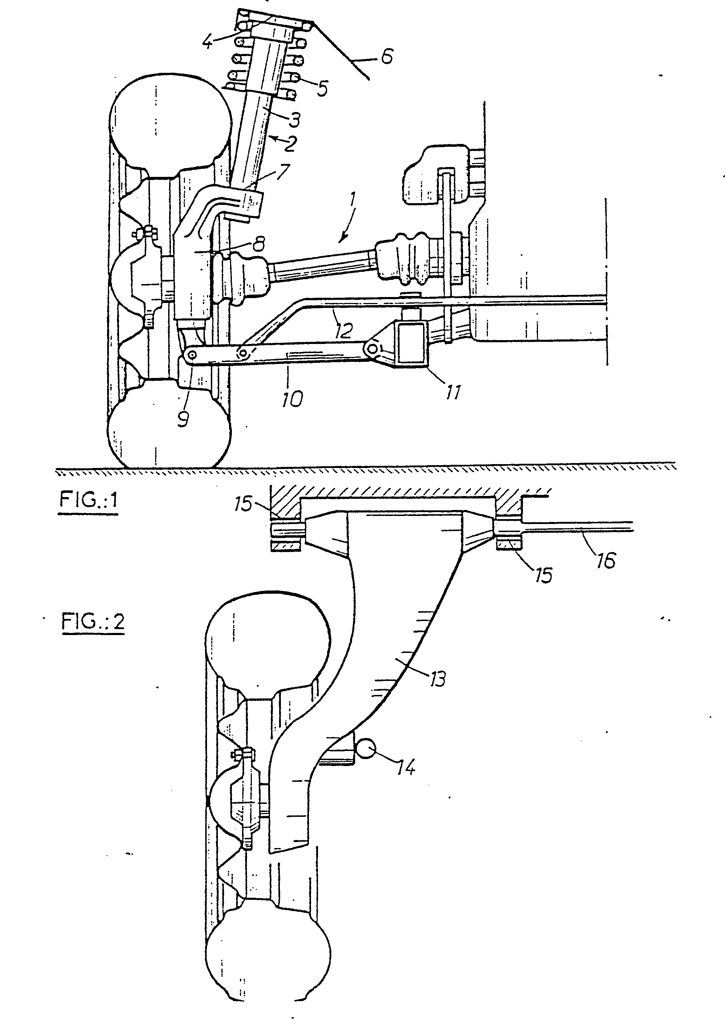

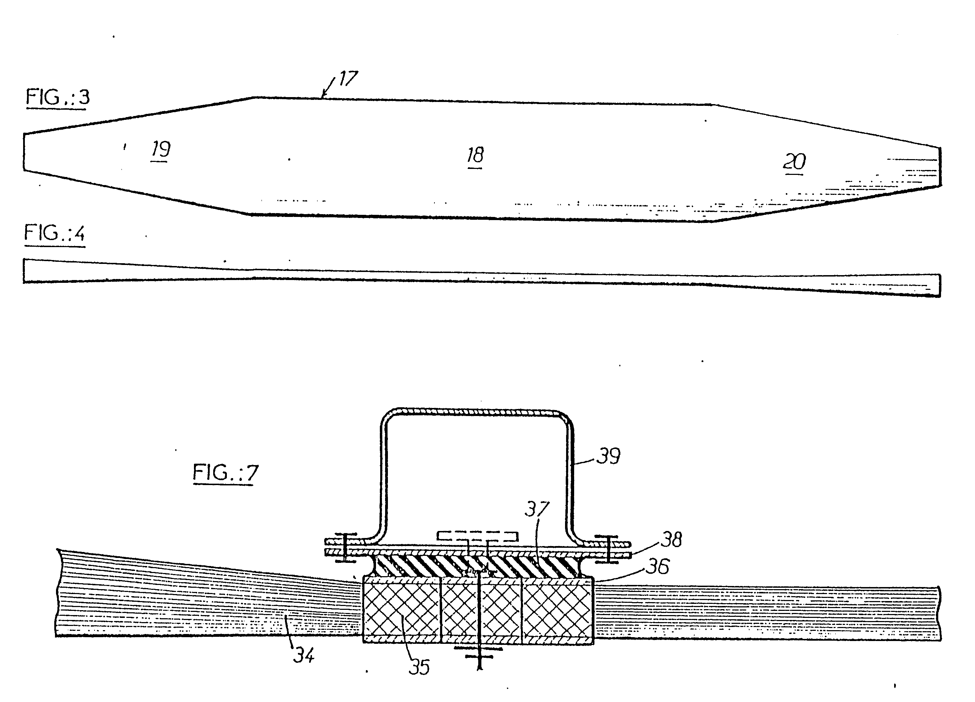

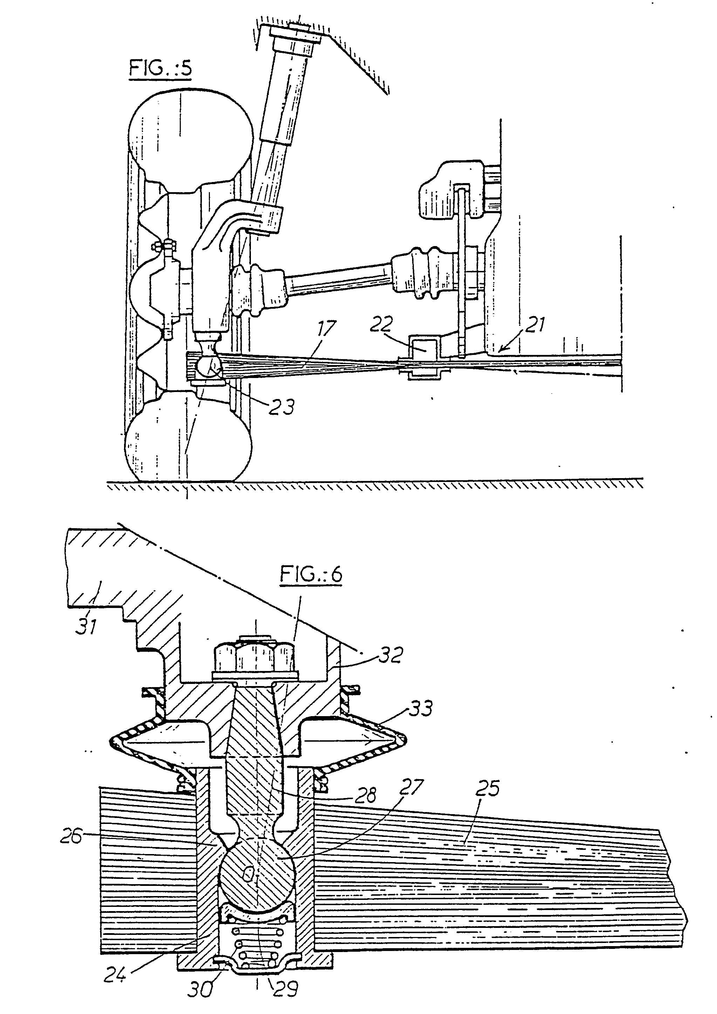

La figure 1 représente en coupe un demi-train avant classique d'un véhicule. La figure 2 représente un demi-train arrière classique d'un véhicule. Les figures 3 et 4 montrent un exemple de réalisation d'une lame élastique selon l'invention. La figure 5 est une vue en coupe d'un demi-train avant équipé d'une lame selon l'invention. La figure 6 est une vue en coupe de la liaison lame-pivot. La figure 7 est une vue en coupe de la liaison lame-caisse.

La suspension avant 1 (Figure 1) du type MacPherson comprend un élément pivot-amortisseur 2. Entre l'extrémité 3 du corps d'amortisseur et l'extrémité 4 de sa tige est fixé le ressort hélicoïdal 5 de suspension. L'extrémité 4 de la tige est fixée à une partie renforcée de la caisse 6. L'autre extrémité 7 du corps du pivot-amortisseur est fixée au support 8 du moyeu de roue et porte en bout une rotule 9 qui coopère avec le sommet d'un triangle ou avec l'extrémité d'une biellette 10 fixée au châssis 11.

Le ressort hélicoïdal 5 peut être remplacé par une barre de torsion fixée sur le triangle ou biellette 10 à une extrémité et sur le châssis 11 à l'autre extrémité.

Les triangles ou biellettes 10 droite et gauche peuvent être réunis par une barre stabilisatrice 12.

La suspension arrière (Figure 2) est à roues indépendantes et chaque roue est supportée par un bras 13 relié à la caisse par un amortisseur 14 et au châssis, par une articulation 15 dont le mouvement de rotation est contrôlé, par exemple, par une barre de torsion 16. Cette barre est dans certaines réalisations remplacée par un ressort hélicoïdal comme pour la suspension avant. Les éléments droit et gauche peuvent être également réunis par une barre stabilisatrice.

Chaque élément de la suspension a un rôle bien défini rappelé ci-après.

La ressort hélicoïdal ou la barre de torsion assure le rappel vertical du véhicule à sa position d'équilibre statique. Sa raideur conditionne l'écrasement sous charge.

La biellette ou le triangle transmet les efforts de traction ou de freinage de la roue au châssis et assure le positionnement géométrique d'un point particulier de la suspension, par exemple du pivot de roue avant.

La guidage précis de la roue et la transmission des efforts de traînée nécessitent deux points de reprise sur la châssis, réalisés soit par le triangle, soit par la combinaison biellette barre anti-dévers.

La barre stabilisatrice limite l'inclinaison du véhicule dans le cas, par exemple, de virage sur une route plate. Cette barre assure le rappel en roulis du véhicule en association avec les ressorts, mais n'intervient pas dans les débattements symétriques des roues droite et gauche, vis-à-vis du châssis, appelés "pilonnement".

La suspension, selon l'invention, se compose d'une lame élastique en un matériau composite présentant dans son plan de symétrie vertical une épaisseur croissante vers la ou les extrémités supportant la roue, et dans son plan horizontal, une largeur importante au niveau des appuis.

Les caractéristiques d'une telle lame permettent de supprimer les ressorts de suspension ou barres de torsion, ainsi que le triangle ou la biellette. Selon les cas, la barre stabilisatrice peut être supprimée ou allégée.

Les figures 3 et 4 montrent une forme de réalisation d'une lame 17, selon l'invention, plus particulièrement destinée à équiper un train avant.

La lame, vue de dessus (Figure 3), présente une partie centrale 18 de forme rectangulaire et de faible épaisseur (Figure 4) terminée par deux parties trapézoïdales 19 et 20, qui vont en s'épaississant à leur extrémité. Selon les caractéristiques demandées à la lame, la partie centrale 18 est plus ou moins longue pour assurer une flexibilité maximale dans cette zone. Lorsque la lame n'est pas sous contrainte ou charge, elle est courbée dans son plan vertical.

La lame peut également ne présenter qu'une extrémité trapézoïdale, l'usage de telles lames sera précisé ultérieurement.

La figure 5 montre un demi-train avant pourvu d'une lame 17 transversale. Cette lame est maintenue au châssis 21 par deux points de liaison (un seul de ces points 22 est représenté) équidistants de l'axe longitudinal du véhicule. Les extrémités de la lame supportent les roues par l'intermédiaire des pivots de fusée 23. Les liaisons de la lame au châssis et à la rotule seront ultérieurement décrites.

Dans ce type de suspension, la lame transversale supportant les deux roues, présente un effet anti-dévers partiel ou total qui permet soit d'alléger la barre stabilisatrice classique, soit de la supprimer.

Selon un autre type de suspension avant ou arrière, les lames transversales ou longitudinales n'ont qu'une extrémité trapézoïdale et ne supportent qu'une seule roue. Dans ce cas, il n'y a pas d'effet anti-dévers et il est nécessaire de prévoir des barres stabilisatrices.

L'utilisation de lames élastiques pour la suspension arrière permet de supprimer les bras et les éléments ressorts (ressort hélicoïdal ou barre de torsion).

Les suspensions à lames transversales supportant une seule roue sont réalisées à partir de deux lames, à une seule extrémité trapézoïdale dont les parties de plus faible épaisseur s'étendent côte à côte sous toute la largeur du châssis.

Les suspensions à lames longitudinales sont réalisées à partir de lames à une seule extrémité trapézoïdale et dont la longueur totale est fonction entre autres de l'élasticité désirée.

La liaison du support de roue à la lame de suspension comporte, selon une forme de réalisation représentée figure 6, un insert tubulaire métallique 24 fixé dans l'extrémité épaisse de la lame de suspension 25. Cet insert présente à sa surface intérieure un bourrelet 26 formant un siège pour l'extrémité sphérique 27 du pivot de fusée 28. L'extrémité sphérique 27 est maintenue appuyée sur le siège par l'intermédiaire d'une coupelle sphérique 29 portée par un ressort de compression 30. Le bourrelet 26 est prévu de manière qu'en fonction du diamètre de la partie sphérique 27 du pivot de fusée, le centre 0 de la partie sphérique soit sur la fibre neutre de la lame élastique. Le pivot de fusée est fixé à la fusée de roue 31 et à une extrémité de la jambe d'amortisseur 32 par des moyens connus. Un soufflet d'étanchéité 33 est fixé entre la jambe d'amortisseur 32 et l'extrémité de l'insert tubulaire 24 pour éviter le pénétration des poussières dans l'articulation.

La liaison du support de roue à la lame de suspension est réalisée d'une manière conventionnelle soit par une rotule dans le cas d'une suspension avant avec pivot telle que précédemment décrite, soit par un élément de liaison pour une suspension arrière. Le centre du point de liaison, rotule ou pièce d'adaptation, est fixé dans le plan de la lame pour éviter toute torsion à celle-ci.

Selon une autre forme de liaison non représentée, l'extrémité de la lame est enserrée et fixée dans un logement d'une pièce métallique comportant un alésage dans lequel pénètre l'extrémité sphérique du pivot de fusée où il est maintenu, par exemple, par des moyens semblables à ceux décrits dans la forme de réalisation précédente.

La figure 7 montre un exemple de liaison souple entre le châssis et la lame de suspension. Dans cette représentation, la lame est transversale, mais une liaison semblable est utilisable pour une lame longitudinale.

La lame 34 est enserrée dans une cage 35 dans laquelle elle est maintenue par tout moyen connu, tel que collage, fixation par broches, etc. La paroi supérieure 36 de la cage porte un bloc d'élastomère 37 sur lequel est fixée, par exemple par vulcanisation, une plaque de fixation 38.

La plaque de fixation est, par exemple, boulonnée sur le longeron 39.

Le bloc d'élastomère 37 présente une capacité de déformation différente dans le sens transversal et dans le sens longitudinal du véhicule. Sa déformation est faible dans le sens longitudinal, afin de transmettre les efforts de traction et de freinage, et importante dans le sens transversal, afin d'absorber les variations de Longueur de la lame résultant de sa déformation dans le plan vertical.

D'autres systèmes commercialement disponibles peuvent être utilisés pour assurer la liaison entre le châssis et la lame. C'est ainsi que l'on peut prévoir, lors de la fabrication de la lame, une ouverture susceptible de recevoir un plot élastique fixé directement ou indirectement au châssis ou aux longerons.

Selon différents modes de réalisation de la suspension:

— lorsque la lame est transversale et supporte deux roues, on prévoit deux liaisons souples au châssis disposées symétriquement par rapport à l'axe du véhicule;
— lorsque la lame est transversale et supporte une seule roue, on prévoit deux liaisons souples au châssis, comme dans l'exemple précédent;
— lorsque la lame est transversale ou longitudinale et supporte une seule roue, on prévoit une liaison souple et une liaison rigide, l'une ou l'autre de ces liaisons pouvant être du côté de la roue supportée.

L'utilisation de lames de suspension conformes à l'invention permet un allégement important de la suspension. Le gain global sur la suspension avant et arrière est d'environ 1/3 sur le poids d'une suspension classique à ressort de suspension, triangle ou biellette, et barre stabilisatrice.

La lame de suspension peut être réalisée soit par découpage d'un profil stratifié à fibres longitudinales de verre/résine époxy, soit selon une méthode préférée par moulage, le nombre de fibres restant constant d'un bout à l'autre de la lame, c'est-à-dire les fibres s'étendant sans coupure (hors usinage) d'un bout à l'autre de la lame et la section restant constante tout le long de la lame.

Cette dernière réalisation permet d'obtenir des lames présentant une très bonne tenue à la fatigue.

Les fibres de verre de l'exemple précédent peuvent être remplacées par d'autres fibres minérales ou organiques naturelles ou synthétiques liées par un liant approprié.

## Revendications

1. Suspension avant ou arrière de véhicule automobile par lame élastique en matériau composite, ladite lame étant fixée sur la châssis du véhicule et supportant à son extrémité libre le support de roue et l'amortisseur, caractérisée en ce que ladite lame (17) présente dans son plan de symétrie vertical une hauteur croissant d'approximativement son point de fixation au châssis à la ou les extrémités (19, 20) supportant le support de roue (23).

2. Suspension selon la revendication 1, caractérisée en ce que la lame présente dans son plan de symétrie vertical une partie de hauteur constante prolongée par au moins une partie de hauteur croissante vers la ou les extrémités supportant le support de roue.

3. Suspension selon la revendication 1 ou 2, caractérisée en ce que la lame (17) présente dans son plan horizontal au moins une partie (19, 20) de forme approximativement trapézoïdale diminuant depuis approximativement son point de fixation au châssis à la ou aux extrémités supportant le support de roue.

4. Suspension selon l'une des revendications 1 à 3, caractérisée en ce que la surface d'une section droite transversale de la lame est constante d'une extrémité à l'autre.

5. Suspension selon l'une des revendications 1 à 4, caractérisée en ce que la lame est constituée de fibres, s'étendant sans coupure longitudinalement d'une extrémité à l'autre, noyées dans un liant approprié.

6. Suspension selon l'une quelconque des revendications précédentes, caractérisée en ce que la lame élastique (17) s'étend transversalement à l'axe longitudinal du véhicule et est fixée au châssis par deux liaisons souples (22) symétriques dudit axe.

7. Suspension selon l'une des revendications 1 à 5, caractérisée en ce qu'elle comporte deux lames, s'étendant côte-à-côte transversalement par rapport à l'axe longitudinal du véhicule, chaque lame supportant à son extrémité libre une roue.

8. Suspension selon la revendication 7, caractérisée en ce qu'une liaison souple est prévue entre les lames et le châssis.

## Patentansprüche

1. Vordere oder hintere Aufhängung für ein Kraftfahrzeug, mit einer Blattfeder aus Verbundmaterial, wobei die Blattfeder am Gestell des Fahrzeuges befestigt ist und mit ihrem freien Ende den Radträger und den Stoßdämpfer stützt, dadurch gekennzeichnet, daß die Blattfeder (17) in ihrer vertikalen Symmetrieebene eine Höhe aufweist, die etwa ab ihrem Befestigungspunkt am Fahrgestell zu dem oder den Enden (19, 20) hin zunimmt, die die Radstützen (23) tragen.

2. Aufhängung nach Anspruch 1, dadurch gekennzeichnet, daß die Blattfeder in ihrer vertikalen Symmetrieebene einen Abschnitt von konstanter Höhe aufweist, an den wenigstens ein Abschnitt anschließt, dessen Höhe zu dem Ende oder den Enden hin zunimmt, die die Radstütze tragen.

3. Aufhängung nach Anspruch 1 oder 2, dadurch gekennzeichnet, daß die Blattfeder (17) in ihrer horizontalen Ebene mindestens einen Abschnitt (19, 20) von etwa trapezförmiger Gestalt aufweist, dessen Breite etwa vom Befestigungspunkt am Fahrgestell zu dem oder den Enden hin abnimmt, die die Radstütze tragen.

4. Aufhängung nach einem der Ansprüche 1 bis 3, dadurch gekennzeichnet, daß die Fläche von rechtwinkligen Querschnitten der Blattfeder von einem Federende bis zum anderen Federende hin gleichbleibend ist.

5. Aufhängung nach einem der Ansprüche 1 bis 4, dadurch gekennzeichnet, daß die Blattfeder Fasern enthält, die sich ohne Unterbrechung längs der Blattfeder von einem Federende bis zum anderen Federende erstrecken und in geeignetes Bindemittel eingebettet sind.

6. Aufhängung nach einem der vorhergehenden Ansprüche, dadurch gekennzeichnet, daß sich die Blattfeder (17) quer zur Längsachse des Fahrzeuges erstreckt und am Fahrgestell mittels zweier, symmetrisch zur Fahrzeug - Längsachse angeordneter elastischer Verbindungen (22) befestigt ist.

7. Aufhängung nach einem der Ansprüche 1 bis 5, dadurch gekennzeichnet, daß sie zwei Blattfedern aufweist, die sich nebeneinander quer zur Längsachse des Fahrzeuges erstrecken, wobei jede Blattfeder an ihrem freien Ende ein Rad stützt.

8. Aufhängung nach Anspruch 7, dadurch gekennzeichnet daß zwischen den Blattfedern und dem Fahrgestell eine elastische Verbindung vorgesehen ist.

## Claims

1. An automobile suspension, front or rear, with an elastic lead made of a composite material, the said leaf being fixed to the vehicle chassis and supporting at its free end the wheel support and the damper, wherein the said leaf (17) has, in its plane of vertical symmetry, a thickness which increases approximately from its mounting to the chassis to the end or ends (19, 20) supporting the wheel support (23).

2. The suspension as claimed in claim 1, wherein the leaf has, in its plane of vertical symmetry, a portion of constant thickness extended by at least a portion of a thickness which increases towards the end or ends supporting the wheel support.

3. The suspension as claimed in either of claim 1 or 2, wherein the said leaf (17) has, in its horizontal plane, at least a portion (19, 20) of approximately trapezoidal shape which the breadth decreases from approximately its mounting to the chassis to the end or ends supporting the wheel support.

4. The suspension as claimed in any of claims 1 to 3, wherein the transverse cross-section of the leaf is constant from one end to the other.

5. The suspension as claimed in any of claims 1 to 4, wherein the leaf consists of fibers extending longitudinally, without being cut, from one end to the other, embedded in an appropriate binder.

6. The suspension as claimed in any of the preceding claims, wherein the elastic leaf (17) lies transverse to the longitudinal axis of the vehicle and is fixed to the chassis by two flexible mountings (22) symmetrical about the said axis.

7. The suspension as claimed in any of claims 1 to 5, wherein it incorporates two leaves lying side by side transversely relative to the longitudinal axis of the vehicle, each leaf supporting a wheel at its free end.

8. The suspension as claimed in claim 7, wherein a flexible mounting is provided between the leaves and the chassis.

0 093 707

FIG.:1

FIG.:2

1

FIG.:3

17

19          18          20

FIG.:4

FIG.:7

39

37

38

36

34

35

0 093 707

FIG.:5

FIG.:6